# EUROPEAN PATENT SPECIFICATION

(11) **EP 4 433 755 B1**
(45) Date of publication and mention of the grant of the patent: **16.07.2025**
(21) Application number: 22817701.0
(22) Date of filing: 14.11.2022
(51) Int. Cl.: F24F 8/10, F24F 11/526, F24F 11/56, F24F 11/74, F24F 110/20, F24F 110/64, F24F 110/70, F24F 130/30, F24F 130/40

(54) **AIR PURIFIER**
LUFTREINIGER
PURIFICATEUR D'AIR

(30) Priority: 17.11.2021 EP 21208701
(43) Date of publication of application: 25.09.2024
(73) Proprietor: Blueair AB, 115 26 Stockholm (SE)
(72) Inventor: DUNBERGER, Lars Henrik, 115 26 Stockholm (SE); NETHAJI, Alagirisamy, 115 26 Stockholm (SE)
(74) Representative: Newbould, Frazer Anthony
(86) International application number: PCT/EP2022/081857
(87) International publication number: WO 2023/088852

(56) References cited:
- EP-A1- 3 578 886
- CN-A- 111 981 596
- GB-A- 2 588 036
- JP-A- 2011 174 624

## Description

The present invention relates to an improved air purifier with automated functions based on situation awareness.

JP 2011/174624 (Panasonic) discloses an air cleaner that effectively prevents virus and the like from spreading by identifying the occurrence of cough and sneeze, as well as the position thereof two-dimensionally, and performing an intensive cleaning of the air in the most contaminated position. The air cleaner includes a body provided with at least three microphones, and is configured to detect coughing or sneezing sounds among the sounds collected by the microphones, and control, according to the sound information, an air-blowing fan, a louver for longitudinal directions, louvers for vertical directions, and an ion generator. This configuration allows the air cleaner to identify the occurrence of cough and sneeze in the room, as well as the position thereof two-dimensionally, and perform an intensive cleaning of the air in the most contaminated position, and thus, a rapid prevention of virus and the like from spreading is achieved.

EP-A-3 578 886 (Philips) discloses an air treatment system combining a conventional air treatment device (such as an air purifier, humidifier or dehumidifier) with an ultrasound device for modifying the air flow created by the air treatment device. This enables a reduction in noise and/or power consumption to achieve a desired air treatment function.

Despite the prior art there remains a need for air purifiers which are able to operate automatically in response to the surrounding environment. In particular, there is a need for an air purifier which can respond to a sudden increase in water droplet borne contamination of the ambient air, for example, when someone in the same room as the purifier sneezes or coughs.

Accordingly, and in a first aspect, there is provided an air purifier comprising the features of claim 1.

We have surprisingly found that air droplets created in a domestic setting can be removed effectively if an air purifier in the vicinity is activated as soon as possible after a cough or a sneeze.

When a person coughs or sneezes a wide variety of air droplet sizes are ejected. Generally, there are three droplet size categories. The large droplets (>20 micrometers) fall quickly to the floor and do not travel far from the person sneezing or coughing. The mid-sized droplets (3-20 micrometers) are maintained for a short period in the air and the smaller droplets (0.6 to 3 micrometers) are generally maintained indefinitely in the air.

While the small-sized droplets are routinely removed by any air purification process, the mid-sized droplets are only removed if the air is sufficiently agitated and passes through an air purifier within two minutes of their ejection.

The accuracy of the detection is dramatically improved through the use of further sensors in addition to the sound sensor. In particular, where the assessment of the sound generated through a noise incident is such that it is unclear as to whether there has been a sneeze or not, the processing of data from further sensors increases the likelihood of a sneeze being accurately detected. By accuracy it is also meant that the correct identification of a noise incident which is not a sneeze is also accurately assessed. A purifier which identifies any noise as a sneeze and activates itself accordingly will likely be turned off.

Preferably, the air purifier comprises a humidity sensor. The humidity sensor may be part of the air purifier or part of a separate electronic device.

Preferably, the air purifier comprises a particle sensor. The particulate sensor may be part of the air purifier or part of a separate electronic device.

Preferably, the air purifier comprises a carbon dioxide sensor. The carbon dioxide sensor may be part of the air purifier or part of a separate electronic device.

Preferably, the air purifier comprises a volatile organic carbon sensor. The volatile organic carbon sensor may be part of the air purifier or part of a separate electronic device.

In order for the air purifier to modify its performance in the event of a sneeze or a cough, it must detect the sounds in the immediate environment. Such sound sensor is preferably a microphone or similar device and is preferably calibrated to detect sounds in the immediate environment, for example in the same room. The sensor could also be part of a separate mobile device and transmit information to the processor accordingly.

The purifier will also comprise means for transmitting information from the sound sensor to the processor. This may be wired or wireless depending on the location of the processor. In one embodiment the processor may be collocated with the air purifier and be wired to the sound sensor. However, it is also possible for the processor to be remote, for example to be part of a mobile electronic device such as a phone or a tablet, or even in another location entirely and be connected wirelessly. The sensor and the processor could be part of a separate mobile device such that the only modification to the air purifier is the ability to be operate as a result of calculations and determinations made separately, for example, in a mobile device.

The processor processes information from the sound sensor and determines whether increased air purification speed is required. The processor accesses a database of sounds in order to determine whether a sound has occurred in the immediate environment or the purifier and which correlates with a cough or a sneeze. If the processor determines that such an event has occurred, it speeds up the air purification rate by speeding up the fan.

Preferably, this occurs by speeding up the fan and, for example, may be that the fan speed is increased to a pre-determined rate commensurate with cleaning the air in the room within a set period of time. In such a manner, the mid-sized air droplets are removed from the ambient air in a short period of time and the likelihood of infecting another person is reduced.

The speed at which the purifier operates is determined by the Clean Air Delivery Rate (CADR) required to clean a room of mid-sized droplets based on purifier performance capability.

For example, a purifier with a CADR of 700m³/h may remove >99% of airborne microbes from a room of 30m³ in less than 15 minutes.

When the purifier determines that the air is clean again, the air purifier reverts to the performance parameters in operation before the sneeze or cough event. Alternatively, the purifier retains an appropriate performance setting depending on the environment and programming by the consumer. For example, where a consumer is concerned about allergies or influenza, the purifier may be programmed to perform at an elevated CADR in order to provide an improved baseline effect.

Preferably, the processor is also able to distinguish the background noise from the cough or sneeze event such that accuracy in detection is achieved. More preferably, the processor is able to calibrate itself based on background noise caused by the air purifier in operation. Such information in both cases will be received by the sensor but additional information may also be transmitted by other sensors where appropriate, e.g. fan speed or basic operational noise. Where the processor is remote from the device the air purifier comprises means for receiving information from the remote processor and thereby to act based on the determination, e.g. if a sneeze is identified, then the fan speed is increased. In such an instance, the processor determines whether a sneeze has occurred and communicates electronically with the fan to increase the speed.

Where the processor is part of the air purifier, the processor communicates electronically with the fan.

In a preferred embodiment there is provided an air purifier as described above where the processor is remote from the purifier. For example, the processor is part of a remote electronic device such as a mobile telephone.

An example of a sound sensor is C-800G commercially available from Sony.

Preferably, the removable filter media may be a particulate filter or gas filter while it is also possible that both a particulate and gas filter may be simultaneously employed.

The air flow speed measured at the removable filter is known in the art as the media velocity. Media velocity is the velocity at which the air travels through the filter. Media velocity has to be controlled perfectly to ensure that the maximum amount of particles are trapped. Too fast and many of the pollutants fly straight through unfiltered. Too slow and the purifier is not reaching the farthest corners of your room quickly enough to be effective.

Preferably, the air purifier comprises an ioniser.

The ioniser used comprises an emitter electrode and a ground electrode. The emitter electrode discharges an ion cloud between the emitter and the receiver on application of a suitable voltage, preferably from -10 to 10kV but more preferably around the range -8 to 8kV.

The emitter electrode is preferably a point, tip or multiple tips or points for example a brush and is in electrical communication with a voltage source. Preferably, the emitter electrode is within 20cm, more preferably 15cm, especially preferably 10 cm and most preferably up to 5 cm from the nearest filter medium to be sterilised by bathing it in an ion cloud during activation of the ioniser when required. This distance is the distance from the tip of the emitter electrode to the nearest part of nearest filtration medium, more specifically the part of the filter medium which filters rather than for example a structural frame.

The receiving electrode is preferably a metallic part in the shape of a ring so that the resulting ion cloud is in three dimensions as the ions are spent away from the emitter and are then pulled towards the receiver. Preferably, the receiving electrode is in the form of a cage which extends away from the emitting electrode in an air flow direction. More preferably, the receiving electrode is in the form of a reticulated arrangement and which extends towards the filter. Such extension may present a hemispherical or partial cylindrical shape such that the receiving electrode is downstream in an air flow direction from the emitting electrode.

Preferably, the emitter is centrally disposed between a receiver in the form of a ring. The emitter may be disposed pointing towards or away from the air flow during use but it is preferred that the emitter is pointed towards the surface to be sterilised, for example, an internal wall or a filter medium.

In a preferred embodiment the further sensor is a particulate sensor.

Preferably, the air purifier comprises two further sensors. For example, a particulate sensor and a humidity sensor.

Preferably, the air purifier comprises three further sensors. For example, a particulate sensor, a humidity sensor and a carbon dioxide sensor.

In a second aspect there is provided a method for operating an air purifier by detecting a sound, comparing said sound with sounds in a database, determining whether a determined sound type is detected, processing data from a further sensor and operating said air purifier, wherein said further sensor is selected from a carbon dioxide sensor, a particulate sensor, a humidity sensor and a volatile organic carbon sensor.

The processor processes first the information from the sound sensor to determine likelihood of a sneeze incidence. The processor then processes information from the further sensor to more accurately determine whether a sneeze incidence has occurred.

### EXAMPLES

### An air purifier Sneeze/Cough Detection System (SCDS)

The challenges involved in devising a sensor for sneeze and cough is multi-pronged: a) The sensor needs to accurately differentiate the signature sound wave pattern of sneeze/cough against speech and more importantly everyday noises. b) The vocal characteristics of various ethnic groups across the world could be different owing to the variations in vocal-fold physiology of different groups. Therefore, the cough/sneeze signature could be different among groups. c) The sensitivity of the sensor needs to accurately detect sneeze/cough sound intensities across all age groups from babies to the elderly d) The sensor would need to compare the detected voice signal against such large & diverse repository of cough/sneeze signatures defined above, and this could slow the response time of the sensor to a sneeze or cough event.

One of the approaches to overcome the above challenges is as follows: The signals from 3 sensors viz., an audio sensor, particle sensor and humidity sensor would be used by the Sneeze/Cough Detection System (SCDS) to a achieve high degree of detection accuracy. The SCDS would decide that an incoming audio signal (IAS) from the audio sensor is indeed a sneeze or cough event based on the signals from these 3 sensors. In order to overcome the challenge of differentiation against diverse speech and environmental noises, the SCDS analyses the IAS in three phases:
1) In the first phase, the sound signal frequencies are analysed by the local processor stationed within the air purifier or a separate electronic device using a small data-base pre-stored in the local memory. This database performs a superficial verification based on frequency range that are unique to cough/sneeze.
2) Once the result of this analysis shows sufficient reason to believe that the sound is a cough or sneeze, as a second phase, the audio pattern is sent to the cloud where the server compares the signal against a large database of stored sounds and noises.
3) Once the server confirms that the possibility of the signal to be a cough/sneeze, in the 3^{rd} phase, the SCDS also verifies the signals from particle & humidity sensor on whether a sudden change in aerosol concentration has occurred during the sneeze/cough event in the form of aerosol particle counts, CO₂ levels and relative humidity changes in the immediate environment.

Subsequently, based on a specific decision-making algorithm the SCDS would confirm the sneeze/cough event and would direct the air purifier to turn to its maximum performance mode to remove the aerosols and its incumbent germs.

The diverse sneeze/cough signature patterns required for the second phase can be sourced from audio-sets available through online and commercial resources. These sound patterns could be stored in the cloud via servers. For example, Google has built an ontology of 632 audio event classes and 2,084,320 sound clips and is available as a free-ware (http://research.google.com/audioset/). This database includes sounds from humans, animals, musical instruments and day to day sounds from environment. Similar data sets are available from institutes and academia that specialize in speech and audio recognition.

Also, the additional sensor checks in the form of signals from particle sensor and humidity sensor are employed to build more accuracy in detection of the sneeze/cough: 1) Every cough/sneeze event would be accompanied by an increase in the aerosol concentration in the immediate environment. The sudden detection of particle/aerosols by the particle sensor stationed within the air purifier would act as an additional confirmation for the cough/sneeze. 2) The increase in humidity during the aerosol release from the cough/sneeze event would be detected by the humidity sensor. This signal would act as a second confirmation. 3) The CO₂ levels within the room would affirm the presence of humans within the room. This positive affirmation can help to differentiate whether the IAS is noise or a true cough/sneeze event.

### Decision Flow Chart

The flow-chart in Figure shows the process of cough/sneeze detection by the sensor. The 5 sensors within the air purifier namely audio sensor, particle sensor, CO₂, light and humidity sensor monitors the room continuously. When an IAS is received by the audio sensor, the signal is first analysed by the microcontroller within the air purifier as a 1^{st} phase. The microcontroller analyses the signal for its broad signature pattern and also compares it with an audio data stored locally in its ROM. This analysis is to broadly evaluate whether the IAS falls within the audio pattern of cough/sneeze. This could be done by verifying the wave frequency and specific tonal points that are unique to cough/sneeze. However, this may not be sufficient to conclude whether the IAS is that of cough/sneeze, as many environmental noises could also have similar audio characteristics. Therefore, in the 2^{nd} phase of the evaluation, the IAS would be further transmitted via the wifi module within the air purifier to the cloud servers. The server would then analyse the signal and compare it with audio signatures that are part of large audio databases such that of Google Audioset. The server subsequently calculates the % match between the incoming audio and sneeze/cough signatures from the cloud databases. If % match is more than 65%, the server would then transmit the % match value back to the wifi module of the air purifier. If the value is less than 65%, server would discard the IAS as a negative sneeze/cough event.

### Algorithm for Final Decision

Once the electronics of the air purifier (microcontroller) receives the %match value, it would use a 'Decision algorithm' to make a final conclusion whether the audio signal is a sneeze/cough event. The microcontroller would also seek signals from a variety of peripheral sensors including particle sensor, humidity sensor, CO₂ sensor and Light Sensor. Depending on the exact value of %match and whether the particle and humidity have reported a sudden change in respective incoming signals and if CO₂ levels affirm human presence, the microcontroller would decide if the IAS is a sneeze/cough event. Also, the light sensor would help to do an overall assessment of the veracity of the input from the sensors to assess if the inmates are sleeping and if the CO2 levels are commensurate with it.

**Table**

| **% match** | **Particle sensor** | **CO₂ sensor** | **Humidity sensor** | **Decision** |
|---|---|---|---|---|
| 65 to 75 | All Positive | | | Sneeze/Cough confirmed |
| | At least one Negative | | | No sneeze/cough |
| 75 to 85 | All Positive | | | Sneeze/Cough confirmed |
| | Both Particle & CO₂ sensor are Positive but Humidity sensor is Negative | | | Sneeze/Cough confirmed |
| | Either Particle / CO2 sensor negative but Humidity sensor is positive | | | No sneeze/cough |
| | All Negative | | | No sneeze/cough |
| 85 to 95 | All Positive | | | Sneeze/Cough confirmed |
| | Both Particle & CO2 sensor Positive but Humidity sensor Negative | | | Sneeze/Cough confirmed |
| | Particle sensor is Positive but CO₂ and Humidity sensor are negative | | | Sneeze/Cough confirmed |
| | Particle sensor is Negative but CO₂ and Humidity sensor positive | | | No sneeze/cough |
| 95 to 100 | Decision is made irrespective of signal input from any of the sensors | | | Sneeze/Cough confirmed |

One probable algorithm decision tree that the SCDS could be deploying is as depicted in the table above. Among the different peripheral sensors that supports the decision-making, the sudden change in input of the particle sensor is considered at highest level of confidence followed by CO₂ and humidity sensor in this order. For a very low % match that falls between 65 to 75%, the algorithm seeks a positive signal from the particle, CO₂ and humidity sensor for its conclusion on whether the IAS is indeed a cough/sneeze event or not. On the contrary when the %match is between 95 to 100%, then a high reliability value is associated to it and therefore it is concluded as a cough/sneeze event irrespective of whether the particle/ CO₂/humidity sensor output is positive or not. For the %match that is of low to medium level reliability between 75 to 85%, a positive signal from both particle sensor and a CO₂ sensor is considered as a higher source of affirmation for the cough/sneeze event than the sudden change in humidity value. And when the %match is 85 to 95%, just the positive input from particle sensor is considered a sufficient affirmation for the cough/sneeze event.

The above is just one such algorithm for making the decision, the exact % match value and the value associated to the positive inputs from humidity, CO₂ and particle sensor could change and could therefore result in entirely different algorithms.

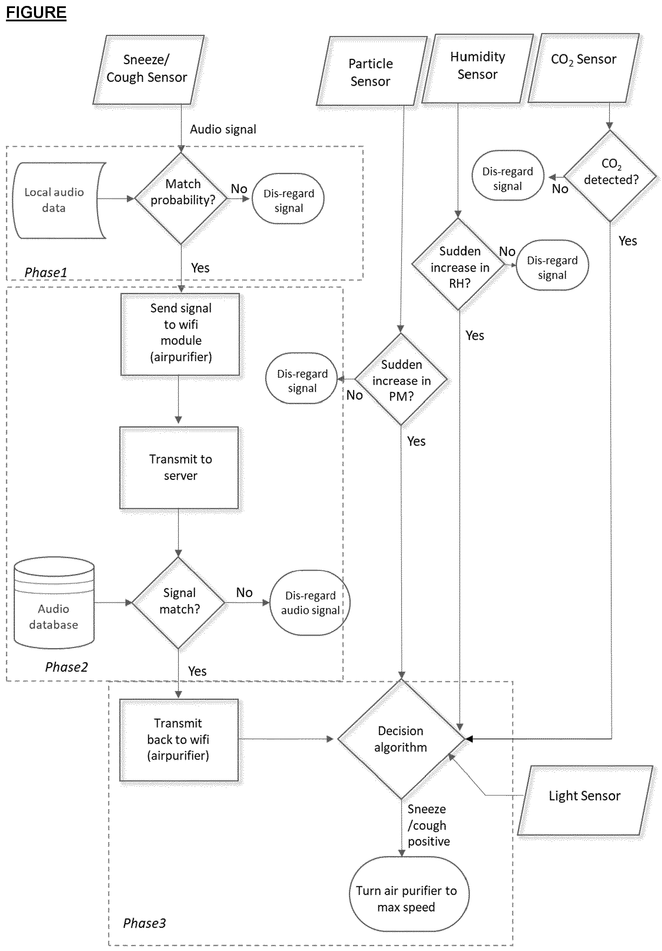

## Claims

1. An air purifier comprising a processor, a fan, a motor, an air inlet and an air outlet, a removable particulate or gas filter, a sound sensor, a further sensor, means for transmitting information from the sound sensor and the further sensor to the processor for processing input from the sound sensor and the further sensor, and means for controlling the fan based on a calculation by the processor, wherein the further sensor is selected from a carbon dioxide sensor, a particulate sensor, a humidity sensor and a volatile organic carbon sensor.

2. An air purifier according to claim 1 wherein the processor compares input from the sound sensor with sounds in a database in order to ascertain the occurrence of a predetermined sound in the detectable environment.

3. An air purifier according to any preceding claim where the processor is in a device remote from the purifier.

4. An air purifier according to any preceding claim wherein said controlling the fan comprises increasing fan speed.

5. An air purifier according to any preceding claim comprising two further sensors.

6. An air purifier according to any of claims 1-4 comprising three further sensors.

7. A method for operating an air purifier by detecting a sound, comparing said sound with sounds in a database, determining whether a determined sound type is detected, processing data from a further sensor and operating said air purifier, wherein said further sensor is selected from a carbon dioxide sensor, a particulate sensor, a humidity sensor and a volatile organic carbon sensor.

8. A method according to claim 7 wherein the sound is detected by a sound detector which is remote from the air purifier.

9. An air purifier as claimed in any of claims 1-6 wherein the processor is part of a mobile electronic device.

## Patentansprüche

1. Luftreiniger, der einen Prozessor, ein Gebläse, einen Motor, einen Lufteinlass und einen Luftauslass, einen abnehmbaren Partikel- oder Gasfilter, einen Schallsensor, einen weiteren Sensor, Mittel zum Übertragen von Informationen vom Schallsensor und vom weiteren Sensor zum Prozessor zum Verarbeiten eines Eingangssignals vom Schallsensor und vom weiteren Sensor, und Mittel zum Steuern des Gebläses auf der Basis einer Berechnung des Prozessors umfasst, wobei der weitere Sensor aus einem Kohlenstoffdioxidsensor, einem Partikelsensor, einem Feuchtigkeitssensor und einem Sensor für flüchtigen organischen Kohlenstoff ausgewählt ist.

2. Luftreiniger nach Anspruch 1, wobei der Prozessor ein Eingangssignal vom Schallsensor mit Schall in einer Datenbank vergleicht, um das Auftreten eines zuvor festgelegten Schalls in der detektierbaren Umgebung zu bestätigen.

3. Luftreiniger nach einem der vorhergehenden Ansprüche, wobei der Prozessor in einer Vorrichtung angeordnet ist, die entfernt vom Luftreiniger angeordnet ist.

4. Luftreiniger nach einem der vorhergehenden Ansprüche, wobei das Steuern des Gebläses das Erhöhen der Gebläsedrehzahl umfasst.

5. Luftreiniger nach einem der vorhergehenden Ansprüche, der zwei weitere Sensoren umfasst.

6. Luftreiniger nach einem der Ansprüche 1-4, der drei weitere Sensoren umfasst.

7. Verfahren zum Betreiben eines Luftreinigers durch Detektieren von Schall, Vergleichen des Schalls mit Schall in einer Datenbank, Feststellen, ob eine festgestellte Schallart detektiert wird, Verarbeiten von Daten von einem weiteren Sensor und Betreiben des Luftreinigers, wobei der weitere Sensor aus einem Kohlenstoffdioxidsensor, einem Partikelsensor, einem Feuchtigkeitssensor und einem Sensor für flüchtigen organischen Kohlenstoff ausgewählt ist.

8. Verfahren nach Anspruch 7, wobei der Schall durch einen Schalldetektor detektiert wird, der entfernt vom Luftreiniger angeordnet ist.

9. Luftreiniger nach einem der Ansprüche 1-6, wobei der Prozessor Teil einer mobilen elektronischen Vorrichtung ist.

## Revendications

1. Purificateur d'air comprenant un processeur, un ventilateur, un moteur, une entrée d'air et une sortie d'air, un filtre à particules ou à gaz amovible, un capteur de son, un autre capteur, un moyen permettant de transmettre des informations du capteur de son et de l'autre capteur au processeur afin de traiter les données d'entrée provenant du capteur de son et de l'autre capteur, et un moyen permettant de commander le ventilateur sur la base d'un calcul effectué par le processeur, dans lequel l'autre capteur est choisi parmi un capteur de dioxyde de carbone, un capteur de particules, un capteur d'humidité et un capteur de carbone organique volatil.

2. Purificateur d'air selon la revendication 1, dans lequel le processeur compare les données d'entrée provenant du capteur de son à des sons contenus dans une base de données afin de vérifier l'occurrence d'un son prédéterminé dans l'environnement détectable.

3. Purificateur d'air selon l'une quelconque des revendications précédentes, dans lequel le processeur se situe dans un dispositif qui est distant du purificateur.

4. Purificateur d'air selon l'une quelconque des revendications précédentes, dans lequel la commande du ventilateur comprend l'augmentation de la vitesse du ventilateur.

5. Purificateur d'air selon l'une quelconque des revendications précédentes, comprenant deux autres capteurs.

6. Purificateur d'air selon l'une quelconque des revendications 1 à 4, comprenant trois autres capteurs.

7. Procédé pour faire fonctionner un purificateur d'air en détectant un son, en comparant ledit son à des sons contenus dans une base de données, en déterminant si un type de son déterminé est détecté, en traitant les données provenant d'un autre capteur et en faisant fonctionner ledit purificateur d'air, dans lequel ledit autre capteur est choisi parmi un capteur de dioxyde de carbone, un capteur de particules, un capteur d'humidité et un capteur de carbone organique volatil.

8. Procédé selon la revendication 7, dans lequel le son est détecté par un détecteur de son qui est distant du purificateur d'air.

9. Purificateur d'air selon l'une quelconque des revendications 1 à 6, dans lequel le processeur fait partie d'un dispositif électronique mobile.
